Europäisches Patentamt

European Patent Office

Office européen des brevets

(19)

(11) Veröffentlichungsnummer: 0 189 537
A1

(12) EUROPÄISCHE PATENTANMELDUNG

(21) Anmeldenummer: 85114605.0

(22) Anmeldetag: 16.11.85

(51) Int. Cl.⁴: H 02 P 8/00
H 02 H 7/08

(30) Priorität: 19.12.84 DE 3446240

(43) Veröffentlichungstag der Anmeldung:
06.08.86 Patentblatt 86/32

(84) Benannte Vertragsstaaten:
AT BE CH FR GB IT LI LU NL SE

(71) Anmelder: Preh Industrieausrüstungen GmbH
Schweinfurter Strasse 5 Postfach 1740
D-8740 Bad Neustadt/Saale(DE)

(72) Erfinder: Bardroff, Hans
Schuhmarktstrasse 12
D-8740 Bad Neustadt/Saale(DE)

(72) Erfinder: Laukenmann, Erich, Dipl.-Ing.
Mönchsweg 30
D-8740 Bad Neustadt/Saale(DE)

(54) Antriebseinrichtung.

(57) Bei einer Antriebseinrichtung mit einem an eine elektrische Stromversorgung angeschlossenen Schrittschaltmotor soll eine mechanische Drehmomentbegrenzung vermieden werden. Es ist hierfür zwischen die Spannungsversorgung 6 und den Schrittschaltmotor 1 ein Konstantstromgeber 5 geschaltet.

./...

P r e h
Industrieausrüstungen GmbH
Schweinfurter Straße 5
8740 Bad Neustadt/Saale


J P-27/84


## Antriebseinrichtung


Die Erfindung betrifft eine Antriebseinrichtung mit einem an eine elektrische Spannungsversorgung angeschlossenen Gleichstrommotor, insbesondere Schrittschaltmotor, und einer Drehmomentbegrenzung.

Bei Drehmomentgebern erfolgt die Drehmomentbegrenzung üblicherweise mit einer mechanischen Sicherheitskupplung. Solche Sicherheitskupplungen verschleißen. Dadurch ändert sich im Laufe der Zeit das Drehmoment, bei dem die Sicherheitskupplung anspricht.

Aufgabe der Erfindung ist es, eine Antriebseinrichtung der eingangs genannten Art vorzuschlagen, bei der eine mechanische Drehmomentbegrenzung vermieden ist.

Erfindungsgemäß ist obige Aufgabe bei einer Antriebseinrichtung der eingangs genannten Art dadurch gelöst, daß zwischen den Motor und die elektrische Spannungsversorgung eine Konstantstromquelle geschaltet ist. Solche Konstantstromquellen sind marktbekannt.

Sie regeln den Strom über eine Spannung. Der Motor wird mit einem konstanten Strom betrieben und erzeugt dadurch ein konstantes Drehmoment. Es ist also erreicht, daß der den Motor durchfließende Strom einen bestimmten Wert nicht übersteigen kann, der einem bestimmten Drehmoment entspricht. Wird das an der Welle des Motors angreifende Last-Drehmoment größer als dieser Wert, dann bleibt der Motor stehen, da der zur Verfügung gestellte Strom nicht ausreicht, das den bestimmten Wert übersteigende Last-Drehmoment zu überwinden.

Diese Drehmomentbegrenzung ist verschleißfrei. Das maximale Drehmoment ist somit keinen Änderungen unterworfen und im wesentlichen nur von dem eingestellten Konstantstromwert abhängig.

In bevorzugter Ausgestaltung der Erfindung ist der Wert des Konstantstromes an der Konstantstromquelle einstellbar. Dadurch kann das maximale Drehmoment den Wünschen entsprechend eingestellt werden.

Um das Stehenbleiben des Motors bei Überlastung anzeigen zu können, ist in bevorzugter Ausgestaltung der Erfindung auf der Welle des Motors eine Kodierscheibe angeordnet, die mit einer Abfrageeinrichtung gekoppelt ist.

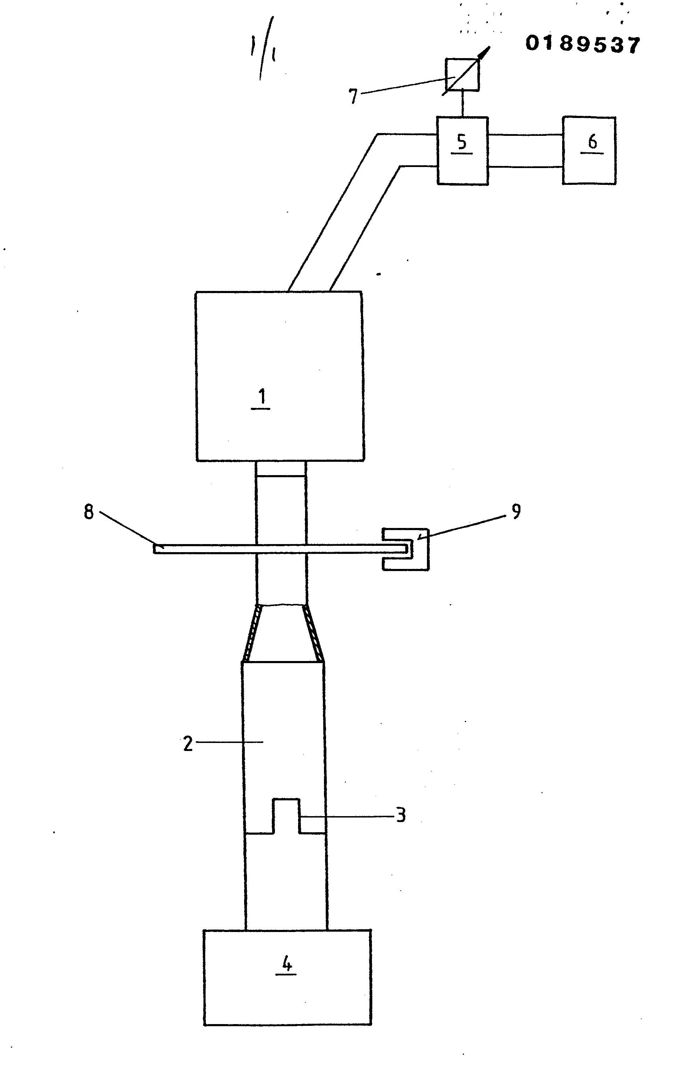

Die Figur zeigt ein Ausführungsbeispiel der Erfindung schematisch.

Ein Schrittschaltmotor 1 weist eine Welle 2 auf, die mittels einer Mitnahmeklaue 3 mit einer Last 4 gekuppelt ist.

Elektrisch ist der Schrittschaltmotor 1 an eine Konstantstromquelle 5 angeschlossen, der eine elektrische Spannungsversorgung 6 vorgeschaltet ist. Mittels eines Stellgliedes 7 läßt sich der elektrische Strom einstellen, den die Konstantstromquelle 5 zum Schrittschaltmotor 1 fließen läßt.

Auf der Welle 2 sitzt eine Kodierscheibe 8, der eine ortsfeste Abfrageeinheit 9 zugeordnet ist.

An dem Stellglied 7 wird der Wert des Konstantstromes eingestellt, bei dem der Schrittschaltmotor 1 ein Drehmoment abgibt, das nicht überschritten werden soll.

Übersteigt das Last-Drehmoment der Last 4 den Wert des über den Konstantstrom eingestellten Drehmomentes, dann bleibt der Schrittschaltmotor 1 stehen. Dementsprechend steht dann auch die sonst mitlaufende Kodierscheibe 8. Dies wertet die Abfrageeinheit 9 aus.

0189537

Bezugszeichenliste J P-27/84

1 Schrittschaltmotor

2 Welle

3 Mitnahmeklaue

4 Last

5 Konstantstromquelle

6 Spannungsversorgung

7 Stellglied

8 Kodierscheibe

9 Abfrageeinheit

Bezugszeichenliste J P-27/84

P r e h
Industrieausrüstungen GmbH
Schweinfurter Straße 5
8740 Bad Neustadt/Saale

J P-27/84

Antriebseinrichtung

A n s p r ü c h e :

1. Antriebseinrichtung mit einem an eine elektrische Stromversorgung angeschlossenen Gleichstrommotor, insbesondere Schrittschaltmotor, und einer Drehmomentbegrenzung, dadurch gekennzeichnet, daß zwischen die Spannungsversorgung (6) und den Motor (1) eine Konstantstromquelle (5) geschaltet ist.

2. Antriebseinrichtung nach Anspruch 1, dadurch gekennzeichnet, daß der Wert des Konstantstromes an der Konstantstromquelle (5) mittels eines Stellgliedes (7) einstellbar ist.

3. Antriebseinrichtung nach einem der vorhergehenden Ansprüche, dadurch gekennzeichnet, daß auf der Welle (2) des Motors (1) eine Kodierscheibe (8) angeordnet ist, die mit einer Abfrageeinheit (9) gekoppelt ist.

0189537

JP - 27/84

Europäisches
Patentamt

**EUROPÄISCHER RECHERCHENBERICHT**

0189537
Nummer der Anmeldung

EP  85 11 4605

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 348 121  (GERHARD BERGER, FABRIKATION ELEKTRISCHER MESSGERÄTE)  * Ansprüche 1, 2, Figuren 1, 2 * | 1,2 | H 02 P  8/00  H 02 H  7/08 |
| | --- | | |
| A | DE-A-2 365 034  (FA. CARL ZEISS)  * Figur 1 * | 3 | |
| | --- | | |
| A | DE-B-2 113 889  (FUJITSU LTD.)  * Spalte 3, Zeilen 21-52 * | 1,2 | |
| | ----- | | |
| | | | **RECHERCHIERTE SACHGEBIETE (Int. Cl.4)** |
| | | | H 02 H  7/08  H 02 P  8/00 |

Der vorliegende Recherchenbericht wurde für alle Patentansprüche erstellt

| Recherchenort BERLIN | Abschlußdatum der Recherche 13-03-1986 | Prüfer LEMMERICH J |
|---|---|---|